# EUROPÄISCHE PATENTSCHRIFT

(11) **EP 3 749 806 B1**
(45) Veröffentlichungstag und Bekanntmachung des Hinweises auf die Patenterteilung: **21.09.2022**
(21) Anmeldenummer: 18729615.7
(22) Anmeldetag: 29.05.2018
(51) Int. Cl.: E01B 29/28, B25B 23/14, B23P 19/06, B25B 21/02, B25B 23/142, B25F 5/00

(54) **SCHLAGSCHRAUBMASCHINE ZUM ANZIEHEN UND LÖSEN VON MUTTERN UND SCHRAUBEN EINES GLEISES**
IMPACT WRENCH FOR TIGHTENING AND LOOSENING NUTS AND SCREWS OF A RAIL
TIREFONNEUSE-BOULONNEUSE À PERCUSSION POUR SERRER ET DESSERRER DES ÉCROUS ET DES BOULONS D'UNE VOIE FERRÉE

(43) Veröffentlichungstag der Anmeldung: 16.12.2020
(73) Patentinhaber: Robel Bahnbaumaschinen GmbH, 83395 Freilassing (DE)
(72) Erfinder: WIDLROITHER, Otto, 83395 Freilassing (DE)
(74) Vertreter: Rau, Schneck & Hübner Patentanwälte Rechtsanwälte PartGmbB
(86) Internationale Anmeldenummer: PCT/EP2018/064024
(87) Internationale Veröffentlichungsnummer: WO 2019/228609

(56) Entgegenhaltungen:
- WO-A1-2014/032643
- WO-A1-2017/129213
- CH-A- 546 128
- DE-U1-202016 006 565

## Beschreibung

Die Erfindung betrifft eine Schlagschraubmaschine zum Anziehen und Lösen von Muttern und Schrauben eines Gleises gemäß dem Oberbegriff des Anspruchs 1.

Eine elektrisch betriebene Schlagschraubmaschine, die zum Anziehen und Lösen von Muttern und Schrauben eines Gleises eingesetzt werden kann, ist bekannt. Eine derartige Schlagschraubmaschine dient beispielsweise zum Anziehen und Lösen von Muttern und Schrauben, die Schienen mit zugehörigen Schwellen verbinden. Das Arbeiten mit einer derartigen Schlagschraubmaschine ist für eine Bedienperson in einem hohen Maß anstrengend, da im Betrieb der Schlagschraubmaschine hohe Drehmomente und Kräfte wirken.

Aus der WO 2014/032 643 A1 ist eine Schraubvorrichtung für Gleisarbeiten mit einem Antriebsmotor, einem Schlagschraubwerk und einem Akkumulator bekannt. Die Schraubvorrichtung wird mittels eines Handgriffs bedient.

Aus der CH 546 128 A, der WO 2017/129 213 A1 und der DE 20 2016 006 565 U1 sind auf einer Schiene eines Gleises manuell verfahrbare Schraubmaschinen bekannt.

Der Erfindung liegt die Aufgabe zugrunde, eine einfach aufgebaute und zuverlässige Schlagschraubmaschine zu schaffen, die einen hohen Bedienkomfort ermöglicht.

Diese Aufgabe wird durch eine Schlagschraubmaschine mit den Merkmalen des Anspruchs 1 gelöst. Durch die Schwingungsentkopplungseinrichtung wird der mindestens eine Handgriff von dem Schlagschraubwerk schwingungsdämpfend entkoppelt. Die Schwingungsentkopplungseinrichtung ist vorzugsweise derart ausgebildet, dass Handarmvibrationen bei einer Bedienperson einen Grenzwert von 5 m/s² nicht überschreiten. Der mindestens eine Handgriff dient zum beidhändigen Halten der Schlagschraubmaschine. Die Schwingungsentkopplungseinrichtung definiert eine Entkopplungsebene, die eine Arbeitsseite von einer Bedienseite trennt. Das Schlagschraubwerk ist an der Arbeitsseite angeordnet, wohingegen der mindestens eine Handgriff an der Bedienseite angeordnet ist, sodass von dem Schlagschraubwerk verursachte Kräfte bzw. Schwingungen aufgrund der Schwingungsentkopplungseinrichtung nur stark gedämpft an dem mindestens einen Handgriff wirken.

Der Begriff Entkopplungsebene ist funktional derart zu verstehen, dass durch die Schwingungsentkopplungseinrichtung die Arbeitsseite von der Bedienseite schwingungsentkoppelt ist. Der Begriff Entkopplungsebene ist keinesfalls streng geometrisch als Ebene zu verstehen.

Dadurch, dass der elektrische Antriebsmotor zusammen mit dem Schlagschraubwerk an der Arbeitsseite der Entkopplungsebene angeordnet ist, werden auch die von dem elektrischen Antriebsmotor verursachten Kräfte bzw. Schwingungen mittels der Schwingungsentkopplungseinrichtung entkoppelt bzw. gedämpft, sodass diese ebenfalls nur stark gedämpft an dem mindestens einen Handgriff wirken. Dadurch, dass der elektrische Antriebsmotor an der Arbeitsseite angeordnet ist, ist die mechanische Verbindung mit dem Schlagschraubwerk einfach und zuverlässig ausgebildet. Insbesondere ist es nicht erforderlich, eine mechanische Antriebswelle durch die Entkopplungsebene zu führen und über die mechanische Antriebswelle übertragene Schwingungen ebenfalls zu entkoppeln bzw. zu dämpfen.

Eine Schlagschraubmaschine nach Anspruch 2 gewährleistet einen hohen Bedienkomfort. Der mindestens eine Schwingungsdämpfer ist elastisch ausgebildet, sodass eine Schwingungsentkopplung bzw. Schwingungsdämpfung erzielt wird. Vorzugsweise umfasst der mindestens eine Schwingungsdämpfer ein elastomeres Material, insbesondere ein Gummimaterial. Die Schwingungsentkopplungseinrichtung weist insbesondere mindestens zwei, insbesondere mindestens drei und insbesondere mindestens vier Schwingungsdämpfer auf. Die Schwingungsdämpfer sind vorzugsweise um eine Drehachse des elektrischen Antriebsmotors angeordnet. Durch den mindestens einen Schwingungsdämpfer wird die Entkopplungsebene zwischen dem Schlagschraubwerk und dem mindestens einen Handgriff ausgebildet.

Eine Schlagschraubmaschine nach Anspruch 3 gewährleistet auf einfache Weise einen hohen Bedienkomfort. Dadurch, dass der Akkumulator an der Bedienseite angeordnet ist, bildet dieser eine Gegenmasse zu dem Schlagschraubwerk und gegebenenfalls zu dem elektrischen Antriebsmotor, sodass der Akkumulator eine effektive Schwingungsdämpfung bzw. Schwingungsentkopplung an dem mindestens einen Handgriff bewirkt. Der Ackumulator ist vorzugsweise an einem Traggestell befestigt, an dem wiederum mindestens ein Handgriff und die Schwingungsentkopplungseinrichtung befestigt sind.

Eine Schlagschraubmaschine nach Anspruch 4 gewährleistet in einfacher Weise einen hohen Bedienkomfort. Dadurch, dass der Akkumulator auswechselbar an dem Traggestell befestigt ist, kann im Betrieb der Schlagschraubmaschine ein entladener Akkumulator schnell und einfach durch einen geladenen Akkumulator ersetzt und der Betrieb der Schlagschraubmaschine fortgesetzt werden. Der mit dem Akkumulator verbundene Handgriff dient einerseits zum Wechseln des Akkumulators und andererseits zum Halten der Schlagschraubmaschine im Betrieb. Dadurch, dass der Akkumulator und der daran befestigte Handgriff an der Bedienseite angeordnet sind, ist der an dem Akkumulator befestigte Handgriff ebenfalls schwingungsentkoppelt bzw. schwingungsgedämpft.

Eine Schlagschraubmaschine nach Anspruch 5 gewährleistet eine hohe Zuverlässigkeit und einen hohen Bedienkomfort. Dadurch, dass die Steuereinrichtung an der Bedienseite angeordnet ist, ist diese vor ungedämpften Kräften bzw. Schwingungen des Schlagschraubwerks geschützt, wodurch die Zuverlässigkeit der Schlagschraubmaschine hoch ist. Die Steuereinrichtung umfasst insbesondere mindestens ein Bedienelement zum Ansteuern des elektrischen Antriebsmotors, das in einfacher Weise an der schwingungsentkoppelten bzw. schwingungsgedämpften Bedienseite nahe des mindestens einen Handgriffs bzw. an dem mindestens einen Handgriff befestigt ist.

Eine Schlagschraubmaschine nach Anspruch 6 gewährleistet auf einfache Weise einen hohen Bedienkomfort. Dadurch, dass durch die Entkopplungsebene ausschließlich Leitungen verlaufen, also durch die Entkopplungsebene keine mechanische Verbindung zum Antreiben des Schlagschraubwerks verläuft, wird eine optimale Schwingungsentkopplung bzw. Schwingungsdämpfung ermöglicht. Leitungen sind elektrische Leitungen zur Ansteuerung und Energieversorgung des elektrischen Antriebsmotors und ggf. mindestens eine Kühlmittelleitung. Dadurch, dass der Akkumulator an der Bedienseite und der elektrische Antriebsmotor zusammen mit dem Schlagschraubwerk an der Arbeitsseite angeordnet sind, ist es ausreichend, dass durch die Entkopplungsebene ausschließlich elektrische Leitungen zur Ansteuerung und zur Energieversorgung des elektrischen Antriebsmotors und ggf. mindestens eine Kühlmittelleitung verlaufen. Die Leitungen übertragen im Wesentlichen keine Kräfte bzw. Schwingungen von der Arbeitsseite zu der Bedienseite.

Weitere Merkmale, Vorteile und Einzelheiten der Erfindung ergeben sich aus der nachfolgenden Beschreibung eines Ausführungsbeispiels. Es zeigen:

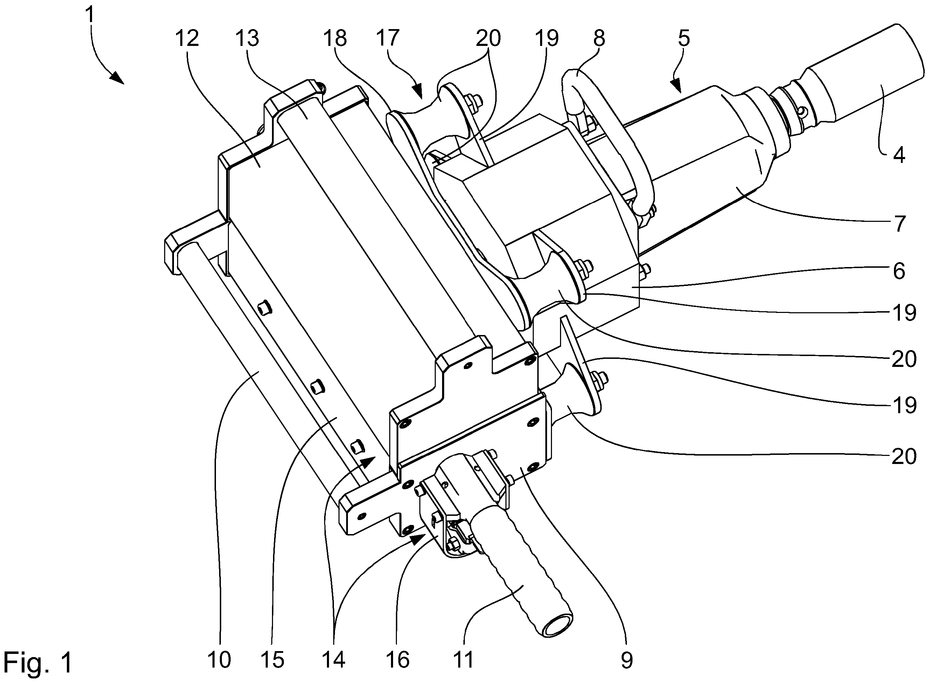

- Fig. 1: eine perspektivische Ansicht einer Schlagschraubmaschine, und
- Fig. 2: eine Schnittdarstellung der Schlagschraubmaschine in Fig. 1.

Eine elektrisch betreibbare Schlagschraubmaschine 1 weist einen elektrischen Antriebsmotor 2 auf, der drehmomentübertragend mit einem Schlagschraubwerk 3 verbunden ist. An dem Schlagschraubwerk 3 ist ein Schraubkopf 4 befestigt. Der elektrische Antriebsmotor 2 und das Schlagschraubwerk 3 sind bekannt und üblich.

Der elektrische Antriebsmotor 2 und das Schlagschraubwerk 3 sind in einem Gehäuse 5 angeordnet, das zweiteilig ausgebildet ist. In einem ersten Gehäuseteil 6 ist der elektrische Antriebsmotor 2 angeordnet, wohingegen in einem zweiten Gehäuseteil 7 das Schlagschraubwerk 3 angeordnet ist. An dem Gehäuse 5 ist ein Traggriff 8 befestigt.

Die Schlagschraubmaschine 1 umfasst weiterhin ein Traggestell 9, an dem ein erster Handgriff 10 im Wesentlichen mittig und ein zweiter Handgriff 11 seitlich angeordnet ist. An dem Traggestell 9 ist ein Akkumulator 12 auswechselbar befestigt. Der Akkumulator 12 ist mit einem dritten Handgriff 13 verbunden. Der Akkumulator 12 versorgt den elektrischen Antriebsmotor 2 und eine Steuereinrichtung 14 mit elektrischer Energie. Die Steuereinrichtung 14 umfasst eine Steuerung 15, die an dem Traggestell 9 befestigt ist, und eine Bedieneinheit 16, die an dem zweiten Handgriff 11 befestigt ist. Die Bedieneinheit 16 weist beispielsweise mindestens ein Bedienelement zum Ansteuern des elektrischen Antriebsmotors 2 auf.

Zur Schwingungsentkopplung der Handgriffe 10, 11, 13 von dem Schlagschraubwerk 3 und dem elektrischen Antriebsmotor 2 weist die Schlagschraubmaschine 1 eine Schwingungsentkopplungseinrichtung 17 auf. Die Schwingungsentkopplungseinrichtung 17 umfasst ein bedienerseitiges Befestigungselement 18, das an dem Traggestell 9 befestigt ist, und arbeitsseitige Befestigungselemente 19, die an dem ersten Gehäuseteil 6 befestigt sind. Die Schwingungsentkopplungseinrichtung 17 umfasst weiterhin mehrere Schwingungsdämpfer 20, die das bedienerseitige Befestigungselement 18 mit den arbeitsseitigen Befestigungselementen 19 schwingungsdämpfend verbinden. Die Schwingungsdämpfer 20 sind aus einem elastomeren Material hergestellt, beispielsweise aus einem Gummimaterial. Beispielhaft weist die Schlagschraubmaschine 1 vier Schwingungsdämpfer 20 auf, die um eine Drehachse D des elektrischen Antriebsmotors 2 angeordnet sind.

Die Schwingungsentkopplungseinrichtung 17 bzw. die Schwingungsdämpfer 20 bilden eine Entkopplungsebene E aus, die eine Arbeitsseite 21 von einer Bedienseite 22 entkoppelt. An der Arbeitsseite 21 sind der elektrische Antriebsmotor 2, das Schlagschraubwerk 3 und der Schraubkopf 4 angeordnet. Demgegenüber sind an der Bedienseite 22 das Traggestell 9 mit den Handgriffen 10, 11 sowie der Akkumulator 12 mit dem Handgriff 13 und die Steuereinrichtung 14 angeordnet.

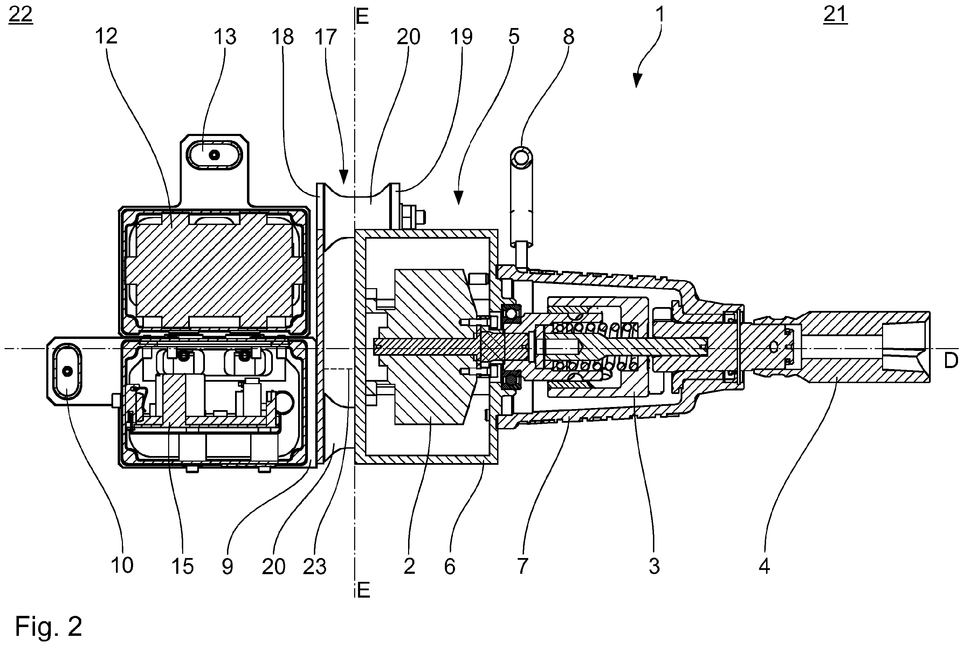

Durch die Entkopplungsebene E verlaufen ausschließlich elektrische Leitungen 23 zur Steuerung und Energieversorgung des elektrischen Antriebsmotors 2 von der Bedienseite 22 zu der Arbeitsseite 21. Die elektrischen Leitungen 23 sind in Fig. 2 lediglich schematisch veranschaulicht.

Die Schlagschraubmaschine 1 dient zum Anziehen und Lösen von Muttern und Schrauben eines Gleises. Die Muttern und Schrauben werden zum Verbinden von Schienen mit zugehörigen Schwellen benötigt. Zum Anziehen und Lösen dieser Muttern und Schrauben sind hohe Drehmomente und Kräfte erforderlich.

Mittels der Steuereinrichtung 14 wird der elektrische Antriebsmotor 2 angesteuert, sodass eine Bedienperson die Muttern und Schrauben in gewünschter Weise im Betrieb der Schlagschraubmaschine 1 betätigen kann. Hierbei hält die Bedienperson die Schlagschraubmaschine 1 beidhändig, beispielsweise an den Handgriffen 10 und 11 oder 13 und 11. Durch die Schwingungsentkopplungseinrichtung 17 werden durch den elektrischen Antriebsmotor 2 und das Schlagschraubwerk 3 verursachte Kräfte bzw. Schwingungen wirkungsvoll gedämpft, sodass die Arbeitsseite 21 von der Bedienseite 22 schwingungsentkoppelt ist. Der Akkumulator 12 wirkt hierbei auf der Bedienseite 22 als Gegenmasse und bewirkt eine effektive Schwingungsdämpfung.

Ist der Akkumulator 12 entladen, so kann dieser in einfacher Weise mittels des Handgriffs 13 ausgetauscht und durch einen geladenen Akkumulator 12 ersetzt werden. Dadurch, dass die Steuereinrichtung 14 auf der Bedienseite 22 angeordnet ist, ist diese schwingungsgeschützt.

## Patentansprüche

1. Schlagschraubmaschine zum Anziehen und Lösen von Muttern und Schrauben eines Gleises mit
- einem Schlagschraubwerk (3),
- einem elektrischen Antriebsmotor (2) zum Antreiben des Schlagschraubwerks (3),
- einem Akkumulator (12) zur Versorgung des elektrischen Antriebsmotors (2) mit elektrischer Energie, und
- mindestens einem Handgriff (10, 11, 13) zum Halten der Schlagschraubmaschine (1),
**gekennzeichnet durch**
eine Schwingungsentkopplungseinrichtung (17) zur Schwingungsentkopplung des mindestens einen Handgriffs (10, 11, 13) und des Schlagschraubwerks (3), wobei das Schlagschraubwerk (3) und der elektrische Antriebsmotor (2) an einer Arbeitsseite (21) einer durch die Schwingungsentkopplungseinrichtung (17) ausgebildeten Entkopplungsebene (E) angeordnet sind.

2. Schlagschraubmaschine nach Anspruch 1, **dadurch gekennzeichnet, dass** die Schwingungsentkopplungseinrichtung (17) mindestens einen Schwingungsdämpfer (20) zur Ausbildung der Entkopplungsebene (E) zwischen dem Schlagschraubwerk (3) und dem mindestens einen Handgriff (10, 11, 13) aufweist.

3. Schlagschraubmaschine nach Anspruch 1 oder 2, **dadurch gekennzeichnet,**
**dass** der mindestens eine Handgriff (10, 11, 13) und der Akkumulator (12) an einer Bedienseite (22) der durch die Schwingungsentkopplungseinrichtung (17) ausgebildeten Entkopplungsebene (E) angeordnet sind.

4. Schlagschraubmaschine nach Anspruch 3 **dadurch gekennzeichnet, dass** der Akkumulator (12) auswechselbar an einem Traggestell (9) befestigt ist und mit einem Handgriff (13) verbunden ist.

5. Schlagschraubmaschine nach einem der Ansprüche 1 bis 4, **dadurch gekennzeichnet,**
**dass** eine Steuereinrichtung (14) an einer Bedienseite (22) der durch die Schwingungsentkopplungseinrichtung (17) ausgebildeten Entkopplungsebene (E) angeordnet ist.

6. Schlagschraubmaschine nach einem der Ansprüche 1 bis 5, **dadurch gekennzeichnet,**
**dass** durch die durch die Schwingungsentkopplungseinrichtung (17) ausgebildete Entkopplungsebene (E) ausschließlich Leitungen (23) verlaufen.

## Claims

1. Impact wrench for tightening and loosening nuts and screws on a track, having
- an impact screwing mechanism (3),
- an electric drive motor (2) for driving the impact screwing mechanism (3),
- a rechargeable battery (12) for supplying the electric drive motor (2) with electrical energy, and
- at least one handle (10, 11, 13) for holding the impact wrench (1),
**characterized by**
a vibration decoupling device (17) for vibration decoupling of the at least one handle (10, 11, 13) and the impact screwing mechanism (3), wherein the impact screwing mechanism (3) and the electric drive motor (2) are arranged on a working side (21) of a decoupling plane (E) formed by the vibration decoupling device (17).

2. Impact wrench according to claim 1, **characterized in that** the vibration decoupling device (17) has at least one vibration damper (20) for the formation of the decoupling plane (E) between the impact screwing mechanism (3) and the at least one handle (10, 11, 13).

3. Impact wrench according to claim 1 or 2, **characterized in that** the at least one handle (10, 11, 13) and the rechargeable battery (12) are arranged on an operator side (22) of the decoupling plane (E) formed by the vibration decoupling device (17).

4. Impact wrench according to claim 3 **characterized in that** the rechargeable battery (12) is secured interchangeably on a support frame (9) and is connected to a handle (13).

5. Impact wrench according to any one of claims 1 to 4, **characterized in that** a control device (14) is arranged on an operator side (22) of the decoupling plane (E) formed by the vibration decoupling device (17).

6. Impact wrench according to any one of claims 1 to 5, **characterized in that** only lines (23) run through the decoupling plane (E) formed by the vibration decoupling device (17).

## Revendications

1. Machine à visser à percussion pour serrer et desserrer des écrous et des boulons d'une voie ferrée avec
- un mécanisme de vissage à percussion (3),
- un moteur d'entraînement électrique (2) pour entraîner le mécanisme de vissage à percussion (3),
- un accumulateur (12) pour alimenter le moteur d'entraînement électrique (2) en énergie électrique, et
- au moins une poignée (10, 11, 13) pour tenir la machine à visser à percussion (1),
**caractérisé par**
un dispositif de découplage de vibrations (17) pour le découplage de vibrations de l'au moins une poignée (10, 11, 13) et du mécanisme de vissage à percussion (3), le mécanisme de vissage à percussion (3) et le moteur d'entraînement électrique (2) étant disposés sur un côté de travail (21) d'un plan de découplage (E) formé par le dispositif de découplage de vibrations (17).

2. Machine à visser à percussion selon la revendication 1, **caractérisée en ce que** le dispositif de découplage des vibrations (17) présente au moins un amortisseur de vibrations (20) pour former le plan de découplage (E) entre le mécanisme de vissage à percussion (3) et l'au moins une poignée (10, 11, 13).

3. Machine à visser à percussion selon la revendication 1 ou 2, **caractérisée**
**en ce que** l'au moins une poignée (10, 11, 13) et l'accumulateur (12) sont disposés sur un côté de commande (22) du plan de découplage (E) formé par le dispositif de découplage des vibrations (17).

4. Machine à visser à percussion selon la revendication 3, **caractérisée en ce que** l'accumulateur (12) est fixé de manière interchangeable sur un châssis porteur (9) et est relié à une poignée (13).

5. Machine à visser à percussion selon l'une quelconque des revendications 1 à 4, **caractérisée**
**en ce qu'**un dispositif de commande (14) est disposé sur un côté de commande (22) du plan de découplage (E) formé par le dispositif de découplage des vibrations (17).

6. Machine à visser à percussion selon l'une quelconque des revendications 1 à 5, **caractérisée**
**en ce que** seules des conduites (23) passent par le plan de découplage (E) formé par le dispositif de découplage des vibrations (17).
